# EUROPÄISCHE PATENTANMELDUNG

(11) **EP 1 829 763 A2**
(43) Veröffentlichungstag der Anmeldung: **05.09.2007**
(21) Anmeldenummer: 07004288.2
(22) Anmeldetag: 02.03.2007
(51) Int. Cl.: B62B 1/00, B62B 1/12, B62B 3/00, B62B 3/02, B62B 3/06

(54) **Vorrichtung zum Transportieren von Lasten**

(30) Priorität: 02.03.2006 DE 102006010225
(71) Anmelder: Hailo-Werk Rudolf Loh GmbH & Co. KG, D-35708 Haiger (DE)
(72) Erfinder: Hartmann, Guido, 57537 Wissen (DE); Bremecke, Björn, 58239 Schwerte (DE); Gaubatz, Martin, 35686 Dillenburg (DE); Piesker, Ronny, 57299 Burbach (DE); Schnurr, Paul Gerhard, 35708 Haiger (DE)
(74) Vertreter: Graefe, Jörg

(57) **Zusammenfassung**

Vorrichtung zum Transportieren von Lasten mit Mitteln zur Aufnahme der zu transportierenden Lasten (Aufnahmemitteln 4) und mit ersten Rollen (2), auf denen die Vorrichtung (1) beim Transportieren der Lasten auf einem Untergrund rollt, wobei die Vorrichtung Führungsmittel (3) umfasst, welche geeignet und eingerichtet sind, die Vorrichtung beim Verschieben der Vorrichtung entlang einer Führungsbahn mit zu den Führungsmitteln (3) der Vorrichtung (1) komplementären Führungsmitteln zu führen.

## Beschreibung

Die Erfindung betrifft eine Vorrichtung zum Transportieren von Lasten mit Mitteln zur Aufnahme der zu transportierenden Last (Aufnahmemitteln) und mit ersten Rollen, auf denen die Vorrichtung beim Transportieren der Last auf einem Untergrund rollt. Die Erfindung betrifft ferner eine Anordnung aus einer Führungsbahn und einer solchen Vorrichtung.

Zum Transportieren von Lasten sind sogenannte Sackkarren bekannt. Anders als ihr Name vermuten lässt, lassen sich mit Sackkarren jedoch nicht nur Säcke, sondern auch Kisten, Elektrogroßgeräte und dergleichen transportieren. Sackkarren sind ein ideales Transportmittel in einer Ebene und in besonderen Formen sind sie auch geeignet, Stufen zu überwinden.

Ferner sind zum Transport von Lasten auf Führungsbahnen verschiebbare Wagen bekannt. Bekannt sind dabei insbesondere Schrägaufzüge, die beispielsweise bei Umzügen verwendet werden können, um vom Straßenniveau Kisten oder Möbelstücke auf ein höheres Niveau zu transportieren, ohne dass es notwendig ist, die einzelnen Kisten oder Möbelstücke über eine Treppe zu tragen.

Während für ein Umzugsunternehmen die Anschaffung sowohl eines Schrägaufzuges als auch die Anschaffung von Sackkarren eine sinnvolle Investition darstellt, erscheint insbesondere die Anschaffung eines Schrägaufzuges für einen Privathaushalt als nicht wirtschaftlich.

Der Erfindung liegt daher die Aufgabe zugrunde, eine Vorrichtung zum Transportieren von Lasten vorzuschlagen, die geeignet ist, im Zusammenspiel mit einer Führungsbahn, zum Beispiel in Form einer Leiter, einen technisch einfachen und zugleich sicheren Schrägaufzug zu bilden.

Diese Aufgabe wird erfindungsgemäß dadurch gelöst, dass die Vorrichtung zum Transportieren von Lasten der eingangs genannten Art Führungsmittel umfasst, welche geeignet und eingerichtet sind, die Vorrichtung beim Verschieben der Vorrichtung entlang einer Führungsbahn mit zu den Führungsmitteln der Vorrichtung komplementären Führungsmitteln zu führen. Eine derartige erfindungsgemäße Vorrichtung zum Transportieren von Lasten kann sowohl als Sackkarre verwendet werden, wozu die Vorrichtung die ersten Rollen aufweist, und als Wagen zum Beispiel eines Schrägaufzuges verwendet werden, wozu die Vorrichtung die Führungsmittel umfasst, mit denen die Verbindung zur Führungsbahn hergestellt werden kann.

Vorzugsweise sind die Führungsmittel der erfindungsgemäßen Vorrichtung in zwei parallelen Ebenen angeordnet, wobei die Ebenen auf zwei Seiten der Führungsmittel der Führungsbahn zum Liegen kommen, wenn die erfindungsgemäße Vorrichtung zusammen mit einer Führungsbahn verwendet wird.

Es ist dabei nicht notwendig, dass die Führungsmittel ständig in beiden Ebenen liegen. Es ist ausreichend, wenn zumindest ein Teil der Führungsmittel in die Ebene geschwenkt werden kann, in der sie bei einer Verwendung zusammen mit einer Führungsbahn liegen müssen.

Die Führungsmittel der Vorrichtung sind vorzugsweise weitere Rollen.

Die Aufnahmemittel einer erfindungsgemäßen Vorrichtung können zwei L-förmige Elemente umfassen, die mit Abstand zueinander angeordnet sind. An den L-förmigen Elementen können Flächenelemente angebracht sein, auf die die zu transportierenden Lasten aufgelegt werden können.

Die ersten Rollen und/oder auch die weiteren Rollen können an den Aufnahmemitteln, insbesondere an den L-förmigen Elementen der Aufnahmemittel drehbar angebracht sein.

Die erfindungsgemäße Vorrichtung kann zumindest eine Handhabe zum Angreifen eines Benutzers beim Verschieben der Vorrichtung auf dem Untergrund umfassen. Diese Handhaben können ein Paar von den ersten Handhaben umfassen, die vorzugsweise schwenkbar an dem Aufnahmemittel angebracht sind. Ein erstes Paar der Führungsmittel der Vorrichtung kann an den ersten Handhaben angebracht sein und gegebenenfalls zusammen mit diesen Handhaben verschwenkbar sein.

Als weitere Handhabe kann die Vorrichtung einen Bügel umfassen, der vorzugsweise höhenverstellbar an dem Aufnahmemittel, insbesondere an den L-förmigen Elementen der Aufnahmemittel angebracht ist. Der Bügel kann vorteilhaft über geeignete Mittel in zwei verschiedenen Raststellungen fixiert werden.

Die Vorrichtung kann ferner ein Mittel für das Angreifen einer Antriebsvorrichtung zum Verschieben der Vorrichtung entlang der Führungsbahn umfassen. Es kann sich dabei um eine Öse oder dergleichen handeln, in der ein Seil eingehängt werden kann, das Teil eines Flaschenzugs oder einer Seilwinde ist.

Als Führungsbahn bei einer erfindungsgemäßen Anordnung aus einer erfindungsgemäßen Vorrichtung und einer Führungsbahn können zwei parallel mit Abstand zueinander angeordnete Holme geeignet sein, die die Führungsmittel der Führungsbahn bilden. Gemäß der Erfindung kann die Führungsbahn eine Leiter sein.

Gemäß der Erfindung können die Führungsmittel der Vorrichtung die Holme der Führungsbahn umgreifen. Die beiden Ebenen, in denen die Führungsmittel der Vorrichtung angeordnet sind, liegen auf zwei gegenüberliegenden Seiten der Holme.

Gemäß der Erfindung kann die Anordnung aus einer erfindungsgemäßen Vorrichtung und einer Führungsbahn eine Antriebsvorrichtung zum Verschieben der erfindungsgemäßen Vorrichtung entlang der Führungsbahn umfassen. Diese Antriebsvorrichtung kann einen Flaschenzug und/oder einen Motor umfassen.

Ein Ausführungsbeispiel für eine erfindungsgemäße Vorrichtung zum Transportieren von Lasten ist in den Zeichnungen näher dargestellt. Es zeigt:
- Fig. 1: eine perspektivische Ansicht der Rückseite der Vorrichtung,
- Fig. 2: eine perspektivische Darstellung der Frontseite der Vorrichtung,
- Fig. 3: einen Schnitt durch die Vorrichtung entlang der Linie III-III,
- Fig. 4: eine Handhabe der Vorrichtung im Schnitt entlang der Linie IV-IV,
- Fig. 5: einen Schnitt durch die Vorrichtung und
- Fig. 6: einen Schnitt durch die Vorrichtung entlang der Linie VI-VI.

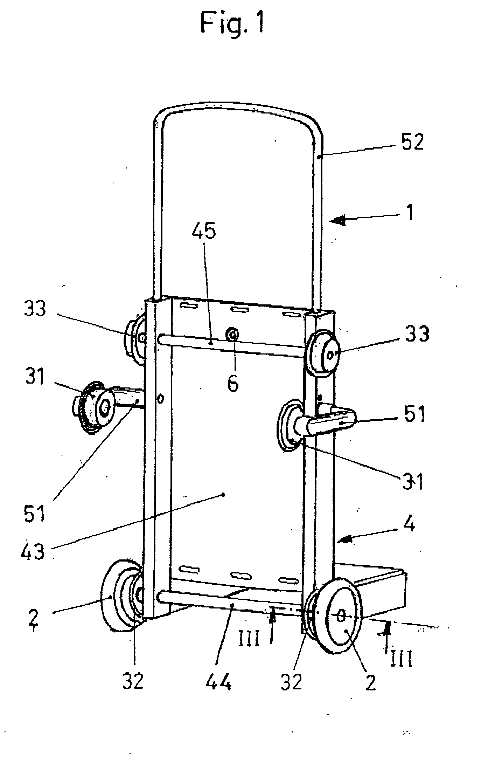

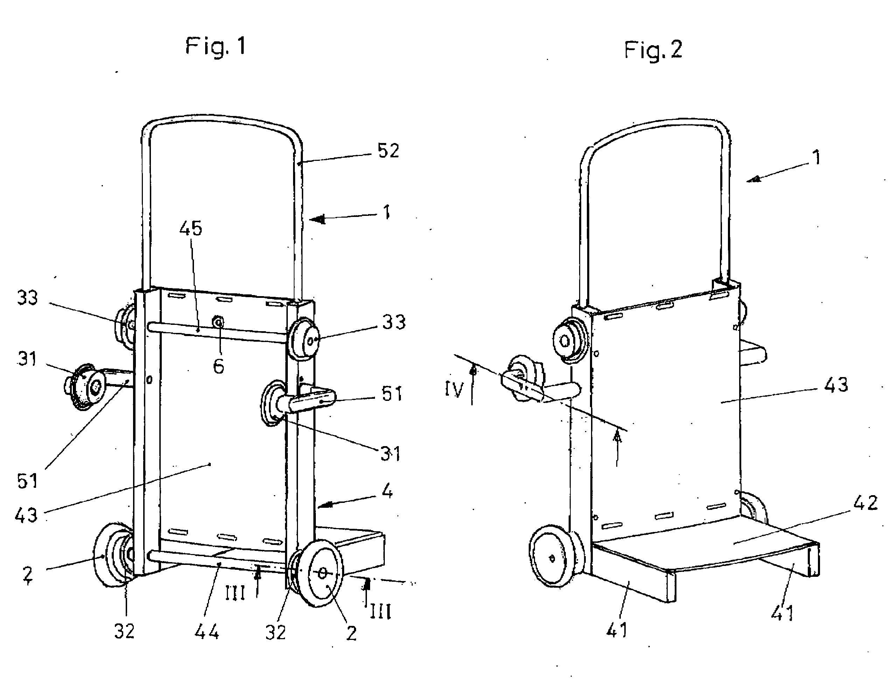

Die in den Fig. 1 bis 6 dargestellte Vorrichtung 1, im Grunde genommen handelt es sich dabei um eine Sackkarre, weist Mittel zur Aufnahme der zu transportierenden Lasten (Aufnahmemittel) auf, an denen erste Rollen 2 drehbar angebracht sind. Über diese Rollen 2 stützt sich die erfindungsgemäße Vorrichtung 1 während eines Verschiebens der erfindungsgemäßen Vorrichtung 1 auf einem Untergrund ab, sofern die Vorrichtung 1 als Sackkarre verwendet wird.

Die Aufnahmemittel 4, die den Hauptteil der erfindungsgemäßen Vorrichtung 1 bilden, umfassen zwei L-förmige Elemente 41. Die L-förmigen Elemente 41 sind über Querstreben 44 und 45 miteinander verbunden. Die eine Querstrebe 44 ist dabei im Bereich des Scheitels der L-förmigen Elemente 41 angebracht, während die andere Querstrebe 45 am oberen Ende des in der Gebrauchslage als Sackkarre nach oben ragenden Schenkels der L-förmigen Elemente 41 zwischen den beiden L-förmigen Elemente 41 angebracht ist. Der Zwischenraum zwischen den beiden L-förmigen Elementen ist durch Flächenelemente 42, 43, abgedeckt. Auf diese Flächenelemente 42, 43 kann die zu transportierende Last aufgelegt, beziehungsweise angelehnt werden.

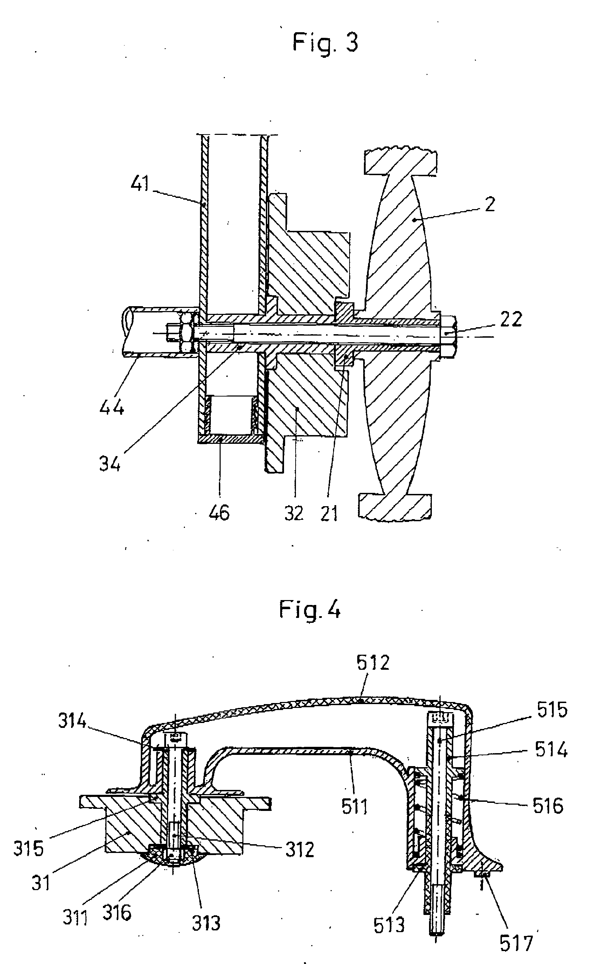

An den Seiten des längeren Schenkels der L-förmigen Elemente 41 ist jeweils eine erste Handhabe 51 angebracht, die zusammen-ein Handhabenpaar bilden. Diese Handhaben, die anhand von Fig. 4 näher erläutert werden, sind schwenkbar an den Schenkeln angebracht. An den Enden dieser Handhaben ist jeweils ein Führungselement in Form einer Rolle 31 angebracht, das für das Verschieben der erfindungsgemäßen Vorrichtung 1 entlang einer Führungsbahn notwendig ist.

Ein weiteres Führungselement 32 ist jeweils am unteren Ende des längeren Schenkels im Scheitelbereich koaxial zu den ersten Rollen 2 angebracht. Auch dieses Führungselement 32 beziehungsweise diese Führungselemente 32 werden durch Rollen gebildet- Dritte Führungselemente 33, ebenfalls in der Form von Rollen 33 sind am oberen Ende des längeren Schenkels drehbar befestigt.

Die als Führungsmittel vorgesehenen Rollen 31, 32, 33 liegen in zwei parallel mit Abstand zueinander liegenden Ebenen. Die ersten Führungselemente 31 liegen dabei in der ausgeschwenkten Stellung der Handhaben 51 in der ersten Ebene, während die zweiten und die dritten Führungselemente 32, 33 in der zweiten Ebene liegen. Die beiden Ebenen sind bei einer Verwendung der erfindungsgemäßen Vorrichtung mit einer Führungsbahn jeweils auf zwei Seiten der Führungsbahn angeordnet.

An dem in Gebrauchslage als Sackkarre oberen Ende der Vorrichtung 1 ist eine zweite Handhabe in Form eines Bügels 52 vorgesehen. Dieser Bügel 52, der die Form eines auf dem Kopf stehenden U's hat, greift mit seinen freien Schenkelenden in die oberen Enden der längeren Schenkel der L-förmigen Elemente 41 ein und ist in diesen verschiebbar gelagert, so dass diese zweite Handhabe 52 höhenverstellbar ist.

An der oberen Querstrebe 45 ist eine Lasche 6 befestigt, die eine Bohrung hat, in welche ein Seil oder dergleichen eingehängt werden kann. Das Seil kann Teil einer Antriebsvorrichtung sein, die die erfindungsgemäße Vorrichtung 1 bei der Verwendung zusammen mit einer Führungsbahn entlang der Führungsbahn zieht. Ist die Führungsbahn schräg angeordnet, kann die Anordnung aus der Führungsbahn und der erfindungsgemäßen Vorrichtung als Schrägaufzug genutzt werden.

Die ersten Rollen. 2 und die zweiten Führungsmittel 32 sind jeweils . über eine Schraube 22 mit dem Aufnahmemitteln 4 verbunden. Die ersten Rollen 2 sowie die zweiten Führungsmittel 32 bildenden Rollen 32 und weisen dazu zentrale Bohrungen auf, in welche mit außen umlaufenden Bunden versehene Buchsen 21, 34 eingesetzt sind. Diese Buchsen 21 beziehungsweise 34 werden von den Schrauben 22 durchgriffen, die weiter eine Bohrung in den L-förmigen Elementen 41 durchgreifen und in je einer in der unteren Querstrebe 44 eingeschweißte Mutter eingeschraubt sind. Die Schrauben 22 verspannen die Buchsen 21 beziehungsweise 34 gegen das L-förmige Element 41, so dass sich eine starre Achse ergibt, auf denen die Rollen 2 beziehungsweise 32 frei drehen können. Die Drehung der Rollen 2 beziehungsweise 32 ist dabei unabhängig voneinander möglich. Die Rollen 2, 32 liegen durch die an den Buchsen vorgesehenen Bunde nicht aneinander und liegen auch nicht an den L-förmigen Elementen 41 der Aufnahmemittel 4 an.

Die ersten Handhaben (S1, Fig. 4) weisen ein in etwa L-förmiges zweiteiliges Gehäuse 511, 512 auf. Das Gehäuseunterteil 511 ist mittels einer Schraube 515 verschwenkbar an den L-förmigen Elementen 41 angebracht. Die Schwenkstellung kann dabei über eine Nocke 517 und zwei entsprechende Ausnehmungen in dem L-förmigen Element 41 festgelegt werden. Zum Verschwenken muss diese Nocke 517 aus der entsprechenden Ausnehmung in den L-förmigen Elementen 41 herausgehoben werden. Dazu müssen die ersten Handhaben 51 nach außen gezogen werden, ohne dass die Verbindung zwischen der Handhabe und dem L-förmigen Element 41 gelöst wird.

Die Schrauben 515 durchgreifen jeweils zwei hintereinander angeordnete Buchsen 514, 513, die einen außen umlaufenden Bund aufweisen und identisch zu den Buchsen 34 im Bereich der zweiten Führungselemente 32 ausgebildet sind. Die Buchsen 513 greifen in je eine Bohrung in den L-förmigen Elementen 41 ein und das Ende der Schrauben 515 durchgreift jeweils das L-förmige Element 41. Die Schrauben sind mit je einer Mutter an den Elementen 41 fixiert. Die Schrauben 515 und die beiden Buchsen 513, 514 sind so gegen das L-förmige Element 41 verspannt. Zwischen den beiden Bunden der Buchsen 513, 514 ist je eine Feder 516 und ein Teil des Gehäuseunterteils 511 eingeklemmt. Die Federn 516 stützen sich einerseits auf dem Bund der Buchsen 514 und zum anderen auf dem Teil der Gehäuseunterteile 511 ab. Da die Gehäuseunterteile ansonsten nicht befestigt sind, können die Gehäuseunterteile gegen den Druck der Federn auf den Schrauben 515 beziehungsweise auf den Buchsen 513, 514 verschoben werden. Dadurch ist es möglich, die Handhaben 51 nach außen zu ziehen und die Nocken 517 aus den Ausnehmungen in den L-förmigen Elementen 41 herauszuheben.

An den freien Enden der Handhabe sind die ersten als Rolle 31 ausgebildeten Führungsmittel der Vorrichtung angebracht. Zur Befestigung dient je eine Schraube 312, Unterlegscheiben 313 und 314, je eine Buchse 315 und je eine Mutter 316. Die Schrauben durchgreifen eine entsprechende Aufnahme am Ende der Gehäuseunterteile 511, in die die Buchsen 315 eingesteckt sind. Die Buchsen sind im übrigen identisch wie die bereits zuvor erwähnten Buchsen 513, 514 und 34 ausgebildet. Auf die Buchsen 315 sind die Rollen 31 aufgesteckt, wobei die Buchsen aus der zentralen Bohrung der Rollen 31 herausragen. Auch das Gewinde der Schrauben 312 ragt aus der zentralen Bohrung der Rollen 31 und auch aus den Buchsen heraus, so dass je eine Mutter unter Zwischenschaltung der Unterlegscheiben 313 auf das freie Ende der Schrauben aufgeschraubt ist, um die Rollen 31 frei drehbar mit dem Gehäuseunterteil 511 zu verbinden. Abdeckkappen 311 schützen die Muttern vor unbeabsichtigtem Lösen. Je ein Gehäuseoberteil 512 deckt das Gehäuseunterteil und die Schraubenköpfe der Schrauben 312 beziehungsweise 515 ab, so dass auch diese nicht unbeabsichtigt gelöst werden können.

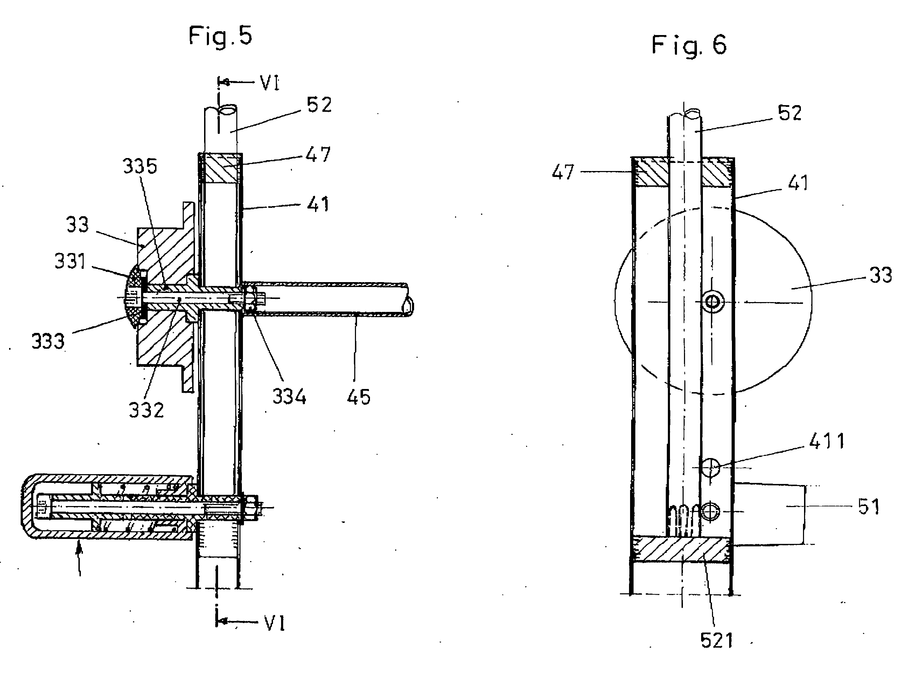

Auch die dritten Führungsmittel (Fig. 5) sind mittels je einer Schraube 332, Unterlegscheiben 333, je einer Mutter 334 und je einer Buchse 335 befestigt. Die Befestigung erfolgt an den oberen Enden der L-förmigen Elemente 41 und Querstrebe 45. In jeden der hohlzylindrischen oberen Querstrebe 45 sind Muttern 334 eingeschweißt. In diese Muttern sind die Schrauben 332 eingeschraubt, die die Buchsen 335 durchgreifen. Die Buchsen stützen sich mit ihrem äußeren Bund auf der Außenseite des L-förmigen Elements 41 ab. Auf die Buchsen 335 ist das Rad 33 aufgesteckt, welches frei auf der jeweiligen Buchse drehen kann. Je eine Abdeckung 331 verhindert, dass die Schrauben unbeabsichtigt gelöst werden können.

Die zweite Handhabe in Form des Bügels 52 ist durch je eine Bohrung in einer Kappe 47, die in die oberen Enden der L-förmigen Elemente 41 eingesetzt sind, mit ihren Schenkeln hindurchgeführt. An den unteren Enden der Schenkel des Bügels 52 sind Kolben 521 befestigt, welche den Bügel im Inneren der L-förmigen Elemente 41 führen. Die zur Befestigung der ersten Handhabe vorgesehene Mutter, in welche die Schraube 515 eingeschraubt ist, dient auf der Innenseite des L-förmigen Elements 41 als Anschlag für den Kolben 521, so dass der Bügel nicht weiter als in der in Fig. 6 dargestellten Position aus den L-förmigen Elementen 41 herausgezogen werden kann. Damit ist gewährleistet, dass eine ausreichende Kraftübertragung zwischen dem Bügel 52 und den L-förmigen Elementen 41 auch zum Transportieren von schweren Lasten möglich ist.

## Patentansprüche

1. Vorrichtung zum Transportieren von Lasten mit Mitteln zur Aufnahme der zu transportierenden Lasten (Aufnahmemitteln 4) und mit ersten Rollen (2), auf denen die Vorrichtung (1) beim Transportieren der Lasten auf einem Untergrund rollt,
**dadurch gekennzeichnet,**
**dass** die Vorrichtung Führungsmittel (3) umfasst, welche geeignet und eingerichtet sind, die Vorrichtung beim Verschieben der Vorrichtung entlang einer Führungsbahn mit zu den Führungsmitteln (3) der Vorrichtung (1) komplementären Führungsmitteln zu führen.

2. Vorrichtung nach Anspruch 1, **dadurch gekennzeichnet, dass** die Führungsmittel (3) der Vorrichtung (1) in zwei parallelen Ebenen angeordnet sind.

3. Vorrichtung nach Anspruch 2, **dadurch gekennzeichnet, dass** ein Teil der Führungsmittel (31) in die eine Ebene schwenkbar sind.

4. Vorrichtung nach einem der Ansprüche 1 bis 3, **dadurch gekennzeichnet, dass** die Führungsmittel (3) der Vorrichtung (1) weitere Rollen (31, 32, 33) umfassen.

5. Vorrichtung nach einem der Ansprüche 1 bis 4, **dadurch gekennzeichnet, dass** die Aufnahmemitteln (4) zwei L-förmige Elemente (41) umfassen, die beabstandet zu einander angeordnet sind.

6. Vorrichtung nach Anspruch 5, **dadurch gekennzeichnet, dass** an den L-förmigen Elemente (41) Flächenelemente (42, 43) angebracht sind, auf die die zu transportierenden Lasten auflegbar sind.

7. Vorrichtung nach einem der Ansprüche 1 bis 6, **dadurch gekennzeichnet, dass** die ersten Rollen (2) an den Aufnahmemitteln (4) drehbar angebracht sind.

8. Vorrichtung nach einem der Ansprüche 1 bis 7, **dadurch gekennzeichnet, dass** die weiteren Rollen (31, 32, 33) zum Teil an den Aufnahmemitteln (4) drehbar angebracht sind.

9. Vorrichtung nach einem der Ansprüche 1 bis 8, **dadurch gekennzeichnet, dass** die Vorrichtung (1) zumindest eine Handhabe (51, 52) zum Angreifen eines Benutzers beim Verschieben der Vorrichtung (1) auf dem Untergrund umfasst.

10. Vorrichtung nach Anspruch 9, **dadurch gekennzeichnet, dass** ein Paar von ersten Handhaben (51) vorzugsweise verschwenkbar an den Aufnahmemitteln (4) angebracht ist.

11. Vorrichtung nach Anspruch 10, **dadurch gekennzeichnet, dass** ein erstes Paar der Führungsmittel (31) der Vorrichtung (1) an den ersten Handhaben (51) angebracht ist.

12. Vorrichtung nach einem der Ansprüche 9 bis 11, **dadurch gekennzeichnet, dass** die Vorrichtung (1) als Handhabe einen Bügel (52) umfasst.

13. Vorrichtung nach Anspruch 12, **dadurch gekennzeichnet, dass** der Bügel (52) höhenverstellbar an den Aufnahmemitteln (4), insbesondere an den L-förmigen Elementen (41) angebracht ist.

14. Vorrichtung nach einem der Ansprüche 1 bis 13, **dadurch gekennzeichnet, dass** die Vorrichtung (1) ein Mittel (6) für das Angreifen eines Antriebsvorrichtung zum Verschieben der Vorrichtung (1) entlang der Führungsbahn umfasst.

15. Anordnung zum Transportieren von Lasten aus einer Führungsbahn und einem Wagen, der die Lasten zum Transportieren aufnimmt und entlang der Führungsbahn verfahrbar ist, **dadurch gekennzeichnet, dass** der Wagen durch eine Vorrichtung (1) nach einem der Ansprüche 1 bis 14 gebildet ist.

16. Anordnung nach Anspruch 15, **dadurch gekennzeichnet, dass** die Führungsbahn zwei parallel und mit Abstand zueinander angeordnete Holme umfasst, die die Führungsmittel der Führungsbahn bilden.

17. Anordnung nach Anspruch 15 oder 16, **dadurch gekennzeichnet, dass** die Führungsbahn eine Leiter ist.

18. Anordnung nach Anspruch 16 oder 17, **dadurch gekennzeichnet, dass** die Führungsmittel (3) der Vorrichtung (1) die Holme der Führungsbahn umgreifen.

19. Anordnung nach einem der Ansprüche 16 bis 18, **dadurch gekennzeichnet, dass** die Ebenen, in denen die Führungsmittel (3) der Vorrichtung angeordnet sind, auf zwei gegenüberliegenden Seiten der Holme liegen.

20. Anordnung nach einem der Ansprüche 15 bis 19, **dadurch gekennzeichnet, dass** die Anordnung eine Antriebsvorrichtung, insbesondere motorische Antriebsvorrichtung zum Verschieben der Vorrichtung entlang der Führungsbahn umfasst.

21. Anordnung nach Anspruch 20, **dadurch gekennzeichnet, dass** die Antriebsvorrichtung einen Flaschenzug umfasst.
